# EUROPEAN PATENT APPLICATION

(11) **EP 1 936 762 A2**
(43) Date of publication of application: **25.06.2008**
(21) Application number: 07118891.6
(22) Date of filing: 19.10.2007
(51) Int. Cl.: H02G 1/08

(54) **Draw wire, particularly but not exclusively for inserting electrical wires in conduits**

(30) Priority: 21.12.2006 IT PD20060464
(71) Applicant: Meccanica Nicoletti S.r.l., I-35010 Curtarolo (IT)
(72) Inventor: Nicoletti, Guido, 35010 Curtarolo (PD) (IT)
(74) Representative: Modiano, Micaela Nadia

(57) **Abstract**

A draw wire, particularly for inserting electrical wires in conduits, of the type constituted by an elongated body (11) made of plastics whose flexibility allows it to be inserted in conduits with bends while maintaining an extended configuration. The draw wire has a transverse sectional profile which has at least one portion of its cross-section which is substantially flat and is extended longitudinally with a guiding surface (11a, 11b, 11c, 11d) for its winding/unwinding, at least one longitudinally extended grip surface (12a, 12b, 12c, 12d) being formed parallel to the at least one guiding surface (11a, 11b, 11c, 11d) and being provided with protrusions arranged in an orderly arrangement and designed to engage corresponding pushing and pulling means for the movement of the draw wire (10).

## Description

The present invention relates to a draw wire particularly but not exclusively for inserting electrical wires in conduits.

The expression "draw wire" is usually used to reference a wire, cable or cord which has a circular cross-section and a diameter typically between 4 and 6 mm and is introduced between the ends of cable conduits, manually or with the aid of appropriately provided tools; the fastening of the end of one or more electrical wires to one end of the draw wire causes the draw wire, when it is extracted, to draw the electrical wire (or wires) with it, making it pass within the conduit.

In order to insert a draw wire in a conduit manually, oscillating movements are usually imparted to such draw wire which facilitate its insertion in the conduit for a length which is approximately equal to the extent of said movement.

However, the extent of the movement of the hand is limited by the ability of the probe to be pushed without bending and without folding back.

This extent, due to the described phenomenon, decreases as the draw wire enters the conduit, due to the increase in the friction force caused by the various bends which the draw wire is forced to make during its advancement and due to the friction of the draw wire against the walls of the conduit.

Typically, the operator, in order to maximize the length of the portion of draw wire that is inserted at each movement and therefore reduce insertion times, is induced to perform such movement with his hand as close as possible to the inlet of the conduit, so as to reduce the phenomenon of draw wire collapse, but often strikes the wall and scratches and bruises his hand.

Once the draw wire has been inserted in the conduit until it exits from the opposite opening with respect to the one from which it has been inserted, the draw wire is pulled to extract it after one or more electrical wires to be drawn into said conduit have been anchored to its loose end.

During this draw wire pulling operation, the force required increases as the inserted length of the electrical wires increases, up to a value, in the last portion, which is greater than, or equal to, approximately 20 kg.

This force, if applied by pulling the draw wire with one's bare hands, due to the amount of force required and to the small dimensions of the draw wire, makes the operation particularly awkward.

Appropriately provided tools are currently known in order to obviate the cited drawbacks and difficulties in the insertion and extraction of a draw wire with respect to a conduit.

Generally, these insertion and extraction tools for a draw wire have a pulling device which is or can be motorized and whose operation is based on the friction force that is generated by compressing the draw wire between one or more pairs of mutually opposite driving rollers.

The force generated with this method depends on the surface of contact between the draw wire and the rollers, i.e., on the cross-section of the draw wire.

Currently known draw wires of the commercial type have, as mentioned, a circular cross-section; this cross-section provides a very small contact surface, which tends to zero and depends in part on the force with which the draw wire is squeezed between the rollers and on the consequent deformation of the draw wire.

The limited contact surface causes the pulling device to be highly unreliable and causes the draw wire to wear earlier than its expected life, indeed due to the intense compression and to the jerks to which the draw wire is subjected when, during its extraction travel, it or the wires anchored to it encounters obstacles (a bend, a bump, et cetera); slippage between the draw wire and the rollers caused by said jerks does not cause mere wear but actually removes material due to the considerable grip with which the traction rollers squeeze and engage the draw wire to be pulled.

Further, the frequent use of lubricants to reduce the sliding friction of the wires inside the conduit makes the draw wire greasy, and in turn the draw wire makes the rollers of the pulling device greasy, making it lose completely its pulling ability.

The aim of the present invention is to provide a draw wire particularly for the insertion of electrical wires in conduits which is capable of obviating the drawbacks of known draw wires and the problems determined by said known draw wires.

Within this aim, an object of the present invention is to provide a draw wire which can be managed more easily during insertion and extraction and to which traction force can be applied more precisely than achievable with known types of draw wire.

Another object of the present invention is to provide a draw wire which wears much more slowly than known draw wires and maintains its integrity.

Another object of the present invention is to provide a draw wire which, if lubricated, does not impair the functionality of the apparatuses designed to push or pull it.

Another object of the present invention is to provide a draw wire particularly but not exclusively for inserting electrical wires in conduits which can be manufactured cheaply with known systems and technologies.

This aim and these and other objects, which will become better apparent hereinafter, are achieved by a draw wire, particularly but not exclusively for inserting electrical wires in conduits, of the type constituted by an elongated body made of plastics whose flexibility allows it to be inserted in conduits with bends while maintaining an extended configuration, characterized in that it has a transverse cross-section whose profile has at least one portion which has a substantially flat cross-section and is extended longitudinally with a guiding surface for its winding/unwinding, at least one grip surface which also is extended longitudinally being formed parallel to said at least one guiding surface and being provided with protrusions arranged in an orderly arrangement and designed to engage corresponding pushing and pulling means for the movement of the draw wire.

Further characteristics and advantages of the invention will become better apparent from the following detailed description of three preferred but not exclusive embodiments thereof, illustrated by way of non-limiting example in the accompanying drawings, wherein:
Figure 1 is a perspective view of a draw wire according to the invention in a first embodiment thereof;
Figure 2 is a sectional view of the draw wire in its first embodiment, between two rollers for its movement;
Figure 3 is a top view of the draw wire in its first embodiment, between two movement rollers;
Figure 4 is a transverse sectional view of a draw wire according to the invention in a second embodiment;
Figure 5 is a transverse sectional view of a draw wire according to the invention in a third embodiment thereof.

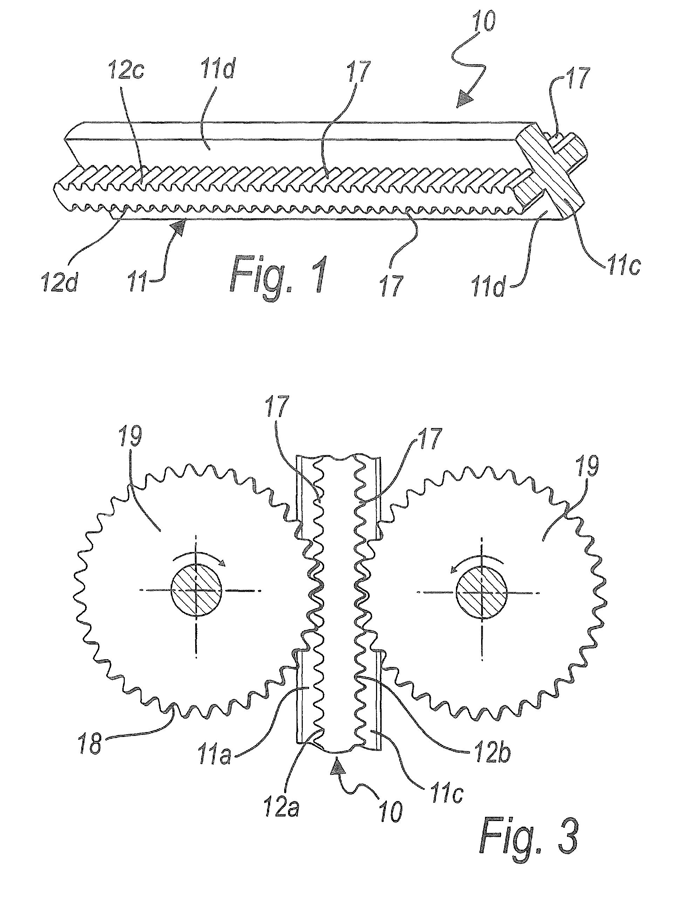

With reference to the figures, a draw wire, particularly for inserting electrical wires in conduits, according to the invention, is generally designated by the reference numeral 10 in its first embodiment, which is shown in Figures 1 to 3.

The draw wire 10 is of the type constituted by an elongated body 11 made of plastics, whose flexibility is such that it can be inserted in conduits which have bends while maintaining the extended configuration.

In its first embodiment, the draw wire 10 has a transverse cross-section whose profile is provided with four portions which have a substantially flat cross-section and are extended longitudinally into four respective guiding surfaces 11a, 11b, 11c and 11d for its winding/unwinding.

Four grip surfaces 12a, 12b, 12c and 12d are formed parallel to the four guiding surfaces 11a, 11b, 11c, 11d and also protrude longitudinally and are provided with protrusions which are arranged in an orderly arrangement and are designed to engage corresponding pusher and traction means for moving the draw wire 10.

The draw wire 10 has a cross-shaped cross-section, and the flat portions of its cross-section, which form the flat guiding surfaces 11a, 11b, 11c, 11d, correspond to the lateral faces of two first opposite arms 13 and 14 of the cross-shaped cross-section.

The grip surfaces 12a, 12b, 12c, 12d correspond to the lateral faces of two second opposite arms 15 and 16 of the cross-shaped cross-section.

The protrusions arranged in an orderly arrangement are constituted, in this constructive embodiment, by a set of teeth 17 for each of the grip surfaces 12a, 12b, 12c, 12d.

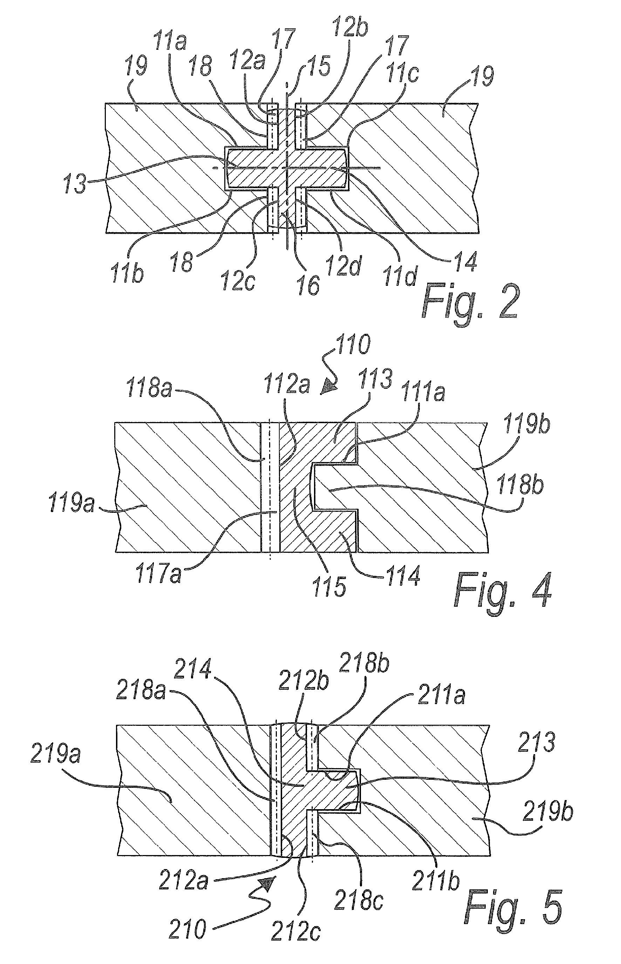

The sets of teeth 17 engage complementarily shaped teeth 18 formed on the corresponding movement rollers, designated schematically by the reference numeral 19 in Figures 2 and 3.

The cross-section of the draw wire 10 is therefore such as to form a large surface of contact with the movement rollers 19, so that said rollers can generate on the draw wire 10 intense, constant and precisely controllable pushing and pulling.

The grip surfaces 12a, 12b, 12c, 12d, in addition to achieving precision and constancy in pushing and pulling, at the same time allow to reduce the specific pressure on the draw wire 10, reducing its elastic deformation, which over time impairs the original characteristics of the material.

The meshing of the sets of teeth 17 with the corresponding movement rollers 19 thus eliminates the problem of early wear caused by the removal of material in case of jerks and slippages, and further allows to eliminate the problems linked to greasing the draw wire 10, since said draw wire is pushed and pulled with greater force and any greasing does not endanger the application of pushing or pulling forces on the draw wire 10, indeed because this transmission of forces is no longer linked to the generation of a certain friction force between the rollers and the draw wire but occurs by using motion transmission means of the type having a substantially fixed ratio, i.e., with gears.

The pushing and pulling applied by means of the rollers 19 to the draw wire 10 are limited only by the shear strength of the material of which the draw wire 10 is made.

The draw wire 10 according to the invention is made of plastics, for example by extrusion and subsequent knurling of the grip surfaces 12a, 12b, 12c, 12d to obtain the sets of teeth 17.

The draw wire 10 is preferably made of nylon or other equivalent plastic material.

The guiding surfaces 11a, 11b, 11c, 11d are indispensable to ensure that the grip surfaces 12a, 12b, 12c, 12d are always arranged in the correct position when they come into contact with the rollers 19, a position which is indispensable, since without correct positioning of the parts that must mesh, extremely rapid deterioration would occur due to the inevitable collisions of the sets of teeth 17 of the draw wire 10 against the teeth 18 of the rollers 19.

Further, the guiding surfaces 12a, 12b, 12c, 12d allow to wind up the draw wire 10 inside an optional appropriately provided container without said draw wire becoming tangled due to the intense torsions to which it is subjected when tracing paths with a plurality of direction changes.

In a second embodiment shown in Figure 4 and designated by the reference numeral 110 therein, the draw wire has a substantially C-shaped cross-section, in which the flat surface portions 111a and 111b correspond to the internal faces of the two parallel arms 113 and 114 of the C-shaped cross-section, while the grip portion 112a corresponds to the outer face of the central portion 115 for connection between the two parallel arms 113 and 114.

Of two opposite movement rollers 119a and 119b, a first roller 119a is provided with corresponding teeth 118a for the set of teeth 117a of the draw wire 110, while the second roller 119b has an annular protrusion 118b which is adapted to enter the space formed between the two parallel arms 113 and 114 so as to act as a guide to maintain the correct meshing configuration between the grip surface 112a and the teeth 118a of the roller 119a.

In a third embodiment, shown in Figure 5 and designated by the reference numeral 210 therein, the draw wire has a substantially T-shaped cross-section, in which the flat guiding surface portions 211a and 211b correspond to the parallel lateral faces of the central stem 213 of the T-shaped cross-section, while the grip surfaces 212a, 212b and 212c correspond to the outer face 212a of the head 214 of the T-shape and to its two inner faces 212b and 212c, i.e., the faces directed toward the central stem 213.

The draw wire 210 can be moved by means of two mutually opposite movement rollers 219a and 219b: a first roller 219a is provided with corresponding teeth 218a for the set of teeth 217a of the first grip surface 212a, while the second roller 219b is provided with a perimetric ring 220 which has a substantially C-shaped cross-section and whose internal space is contoured to accommodate the longitudinal rib of the draw wire 210 which is formed by the protrusion of the central stem 213 of the T-shaped cross-section; the perimetric ring 220 has, on its edges, teeth 218b and 218c which are designed respectively to mesh with the sets of teeth of the corresponding grip surfaces 212b and 212c.

The embodiments of the draw wire 10, 110 and 210 described here are to be considered as non-limiting examples of the invention; the cross-section of the draw wire according to the invention in fact is to be understood as having any shape, with at least one flat guiding portion and at least one grip portion with protrusions which are arranged in an orderly arrangement and are designed to engage corresponding pushing and pulling means for the movement of said draw wire.

In practice it has been found that the invention thus described solves the problems noted in known types of draw wire.

In particular, the present invention provides a draw wire which can be managed more easily during operations for insertion and extraction in and from conduits for laying wires; the pulling and pushing forces can be applied to the draw wire according to the invention with greater precision than achievable with known types of draw wire.

Moreover, the present invention provides a draw wire which wears much more slowly than known draw wires and indeed maintains its integrity for a long time.

Further, the present invention provides a draw wire which, if lubricated, does not impair the functionality of the apparatuses designed to push it or pull it.

Moreover, the present invention provides a draw wire particularly for inserting electrical wires in conduits which can be manufactured cheaply with known systems and technologies.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2006A000464 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A draw wire, particularly for inserting electrical wires in conduits, of the type constituted by an elongated body (11) made of plastics whose flexibility allows it to be inserted in conduits with bends while maintaining an extended configuration, **characterized in that** it has a transverse cross-section whose profile has at least one portion which has a substantially flat cross-section and is extended longitudinally with a guiding surface (11a, 11b, 11c, 11d) for its winding/unwinding, at least one grip surface (12a, 12b, 12c, 12d) which also is extended longitudinally being formed parallel to said at least one guiding surface (11a, 11b, 11c, 11d) and being provided with protrusions arranged in an orderly arrangement and designed to engage corresponding pushing and pulling means for the movement of said draw wire (10).

2. The draw wire according to claim 1, **characterized in that** it has a cross-shaped cross-section and **in that** the portions of the cross-section that form the flat guiding surfaces (11a, 11b, 11c, 11d) correspond to the lateral faces of two first opposite arms (13, 14) of said cross-shaped cross-section.

3. The draw wire according to the preceding claims, **characterized in that** the grip surfaces (12a, 12b, 12c, 12d) correspond to the lateral faces of two second opposite arms (15, 16) of said cross-shaped cross-section.

4. The draw wire according to one or more of the preceding claims, **characterized in that** said protrusions arranged in an orderly arrangement are constituted by a set of teeth (17) for each of the grip surfaces (12a, 12b, 12c, 12d).

5. The draw wire according to the preceding claim, **characterized in that** said sets of teeth (17) engage complementarily shaped teeth (18) which are provided on the corresponding movement rollers (19).

6. The draw wire according to one or more of the preceding claims, **characterized in that** it is made of plastics.

7. The draw wire according to the preceding claim, **characterized in that** it is obtained by extrusion and subsequent knurling of the grip surfaces (12a, 12b, 12c, 12d) to obtain the sets of teeth (17).

8. The draw wire according to one or more of the preceding claims, **characterized in that** it is preferably made of nylon or other equivalent plastic material.

9. The draw wire according to one or more of claims 1 and 5 to 8, **characterized in that** it has a substantially C-shaped cross-section, in which the flat guiding surfaces (111a, 111b, 111c) correspond to the internal faces of the two parallel arms (113, 114) of said C-shaped cross-section, while the grip surface (112a) corresponds to the outer face of the central portion (115) for connection between the two parallel arms (113, 114).

10. The draw wire according to the preceding claim, **characterized in that** a first roller (119a) of two opposite movement rollers (119a, 119b) for said draw wire (110) is provided with corresponding teeth (118a) for the set of teeth (117a) of the grip surface (112a), while the second roller (119b) is provided with an annular protrusion (118b) which is adapted to enter the space formed between the two parallel arms (113, 114) so as to act as a guide to maintain the correct meshing configuration between the grip surface (112a) and the teeth (118a) of the roller (119a).

11. The draw wire according to claims 1 and 5 to 8, **characterized in that** it has a substantially T-shaped cross-section in which the flat guiding surfaces (211 a, 211b) correspond to the parallel lateral faces of the central stem (213) of said T-shaped cross-section, while the grip surfaces (212a, 212b, 212c) correspond to the outer face (212a) of the head (214) of the T-shaped cross-section and to its two internal faces (212b, 212c), i.e., the faces directed toward the central stem (213).

12. The draw wire according to the preceding claim, **characterized in that** it can be moved by means of two opposite movement rollers (219a, 219b), a first roller (219a) provided with corresponding sets of teeth (218a) for the set of teeth (217a) of the first grip surface (212a), and a second roller (219b) provided with a perimetric ring (220) which has a substantially C-shaped cross-section, the space of which is contoured to accommodate the longitudinal rib of the draw wire (210) which is formed by the protrusion of the central stem (213) of the T-shaped cross-section.
